(19) **Europäisches Patentamt / European Patent Office / Office européen des brevets**

(11) **EP 3 659 158 B1**

(12) **FASCICULE DE BREVET EUROPEEN**

(45) Date de publication et mention
de la délivrance du brevet:
**29.09.2021 Bulletin 2021/39**

(51) Int Cl.:
*G21C 3/04* *(2006.01)*    *G21C 3/06* *(2006.01)*
*G21C 7/36* *(2006.01)*    *G21C 17/10* *(2006.01)*
*G21D 3/08* *(2006.01)*

(21) Numéro de dépôt: **18743828.8**

(22) Date de dépôt: **30.07.2018**

(86) Numéro de dépôt international:
**PCT/EP2018/070608**

(87) Numéro de publication internationale:
**WO 2019/020836 (31.01.2019 Gazette 2019/05)**

(54) **PROCÉDÉ DE SURVEILLANCE D'UN COEUR NUCLÉAIRE COMPRENANT UNE RELAXATION D'UN SEUIL, PROGRAMME, SUPPORT ET RÉACTEUR NUCLÉAIRE ASSOCIÉS**

VERFAHREN ZUR ÜBERWACHUNG EINES KERNREAKTORS MIT EINER RELAXATION EINER SCHWELLE UND ZUGEHÖRIGES PROGRAMM, TRÄGER UND KERNREAKTOR

METHOD FOR MONITORING A NUCLEAR CORE COMPRISING A RELAXATION OF A THRESHOLD, AND ASSOCIATED PROGRAMME, SUPPORT AND NUCLEAR REACTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2017 FR 1757237**

(43) Date de publication de la demande:
**03.06.2020 Bulletin 2020/23**

(73) Titulaire: **Framatome**
**92400 Courbevoie (FR)**

(72) Inventeurs:
• **ROYERE, Christian**
**92140 Clamart (FR)**
• **LASNE, Christophe**
**92800 Puteaux (FR)**

(74) Mandataire: **Lavoix**
**2, place d'Estienne d'Orves**
**75441 Paris Cedex 09 (FR)**

(56) Documents cités:
**DE-A1- 2 753 028**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de surveillance d'un réacteur nucléaire comprenant un cœur dans lequel des assemblages de combustible sont chargés, chaque assemblage comportant des crayons de combustible nucléaire comportant chacun des pastilles de combustible nucléaire et une gaine entourant les pastilles.

L'invention s'applique, par exemple, aux réacteurs à eau pressurisée.

De manière classique, le cœur d'un tel réacteur est chargé d'assemblages de combustible nucléaire.

Chaque assemblage comprend un faisceau de crayons de combustible nucléaire, les crayons comprenant une gaine renfermant des pastilles de combustible nucléaire.

Il peut être utile, notamment dans des pays comme la France où 80% de l'électricité est produite par des réacteurs nucléaires, que la puissance globale fournie par les réacteurs varie afin de s'adapter aux besoins du réseau électrique qu'ils alimentent.

En particulier, il est souhaitable de pouvoir faire fonctionner les réacteurs à puissance globale réduite pendant une longue période où la demande du réseau est faible, avant de revenir si nécessaire à puissance globale nominale.

Pour autant, une telle exploitation de chaque réacteur, qui permet de mieux exploiter ses capacités, ne doit pas induire de problème de sûreté.

Un des phénomènes limitant la manœuvrabilité des réacteurs nucléaires est notamment le phénomène d'Interaction Pastille/Gaine (IPG) ou Pellet/Cladding Interaction (PCI) en anglais.

En effet, lorsque le réacteur fonctionne à sa puissance globale nominale PN, les crayons de combustible nucléaire sont, selon le terme employé dans la technique, conditionnés.

Pour un crayon donné, le conditionnement se caractérise essentiellement par la fermeture du jeu radial entre les pastilles et la gaine, due au fluage de la gaine et au gonflement des pastilles.

S'il n'y a pas de risque de rupture de la gaine en régime permanent du fait de l'équilibre thermomécanique dans la gaine à des niveaux de contraintes assez faibles, un risque apparaît par contre dès que la puissance fournie par le crayon considéré varie fortement et rapidement.

En effet, une augmentation de puissance locale engendre une augmentation de la température dans le crayon. Etant donnée la différence des caractéristiques mécaniques (coefficient de dilatation thermique, module d'Young) et la différence de température entre la pastille à base d'oxyde d'uranium et la gaine habituellement en alliage de zirconium, la pastille va se dilater davantage que la gaine et imposer sa déformation à cette dernière.

Par ailleurs, la présence dans l'espace entre la gaine et la pastille de produits de fission corrosifs, tels que l'iode, crée les conditions de la corrosion sous contrainte. Ainsi, la déformation imposée par la pastille à la gaine lors d'un transitoire de puissance globale est susceptible de provoquer une rupture de la gaine.

Ce risque de rupture de gaine lors d'un transitoire de puissance est exacerbé lorsque les crayons ne sont plus conditionnés, c'est-à-dire lorsqu'il n'y a plus d'équilibre thermomécanique entre la pastille et la gaine. Cette rupture d'équilibre se manifeste lors du retour à puissance nominale après un fonctionnement prolongé à puissance intermédiaire.

En effet, lorsque la puissance baisse, la température diminue plus fortement dans la pastille que dans la gaine entrainant une réouverture du jeu radial due à la dilatation différentielle. Si le réacteur reste à puissance intermédiaire, ce jeu diminue à cause du fluage de la gaine vers l'intérieur car la pression du fluide primaire est supérieure à la pression interne des crayons. Lorsque le réacteur retourne à puissance nominale, la pastille exerce alors une pression sur la gaine à l'intérieur de laquelle apparaît alors un champ de contraintes. Si un transitoire d'augmentation de puissance intervient à ce moment, il conduit alors à un risque de rupture de gaine plus précoce. On parle alors de déconditionnement du combustible. Ce déconditionnement est d'autant plus important que le réacteur fonctionne longtemps à puissance intermédiaire.

Or, une telle rupture de la gaine n'est pas admissible pour des raisons de sûreté puisqu'elle pourrait résulter en la libération de produits de fission dans le circuit primaire du réacteur nucléaire.

DE 27 53 028 A1 divulgue un réacteur nucléaire fonctionnant à une puissance inférieure à une limite de puissance linéique variable.

La demande de brevet FR 2 924 852 décrit un procédé de détermination de la valeur d'un paramètre représentatif de la manœuvrabilité d'un réacteur nucléaire.

Ce procédé permet ainsi de définir des domaines d'exploitation dans lesquels le réacteur nucléaire peut fonctionner de manière sûre, même si un transitoire accidentel de puissance globale survient.

Cependant, certaines marges d'exploitation sont contraignantes pour l'exploitation des réacteurs, en particulier en Fonctionnement Prolongé à Puissance Intermédiaire (FPPI) ou Extended Reduced Power Operation (ERPO) en anglais.

En France, le fonctionnement prolongé à puissance intermédiaire est plus précisément défini comme étant le fonctionnement du réacteur en régime permanent, à une puissance globale PI inférieure ou égale à par exemple environ 92% de sa puissance nominale PN sur par exemple une durée cumulée de plus de 8 h, par exemple de plus de 12 heures, par plage de 24 h glissantes.

Cela permet notamment d'adapter la production d'électricité à la demande.

Un but de l'invention est d'accroître la manœuvrabilité du réacteur tout en garantissant un fonctionnement sûr au cours de l'exploitation du cœur.

A cet effet, l'invention a pour objet un procédé de surveillance du type précité comme défini par la revendication 1 et comprenant les étapes suivantes :

- détermination d'au moins une durée limite de fonctionnement du réacteur nucléaire à une puissance inférieure ou égale à environ 92% de la puissance nominale du réacteur nucléaire dit fonctionnement à puissance intermédiaire, de sorte à éviter une rupture d'au moins une des gaines,
- fonctionnement du réacteur nucléaire à puissance intermédiaire pendant une durée réelle strictement inférieure à la durée limite, et
- relaxation d'au moins un seuil de protection du réacteur nucléaire en fonction d'une différence entre la durée limite et la durée réelle, le seuil de protection étant une limite de puissance linéique en tout point du coeur.

Selon des modes particuliers de l'invention, le procédé de surveillance présente l'une ou plusieurs des caractéristiques suivantes, prise(s) isolément ou suivant toute(s) combinaison(s) techniquement possible(s) :

- le procédé comprend une étape de détermination d'une relation de la relaxation du seuil de protection en fonction de la différence entre la durée limite et la durée réelle, la détermination de la relation de relaxation étant réalisée avant le fonctionnement du réacteur,
- le procédé comprend les étapes suivantes avant la détermination de la durée limite de fonctionnement :

  • calcul d'une puissance linéique seuil, et
  • calcul d'une puissance linéique à 100% correspondant à une estimation de la puissance linéique en tout point du cœur et en fonction du temps si le réacteur fonctionne à puissance nominale à partir d'une mesure et/ou d'un calcul de la distribution de la puissance réelle en tout point du cœur en fonction du temps,

  la détermination de la durée limite étant réalisée en fonction de la différence entre la puissance linéique seuil et la puissance linéique à 100%,

- la puissance linéique seuil est calculée en tout point du cœur et en fonction du temps, la distribution de puissance du cœur étant telle qu'en tout point du cœur, une puissance linéique est inférieure à la puissance linéique seuil,
- le procédé comprend les étapes suivantes avant le calcul de la puissance linéique seuil :

  • calcul d'une puissance linéique de rupture en tout point du cœur et en fonction du temps, et
  • calcul d'une variation maximale de puissance linéique en tout point du cœur induite par des transitoires accidentels,

  la puissance linéique seuil étant égale à la différence entre la puissance linéique de rupture et la variation maximale induite par des transitoires accidentels,

- la puissance linéique de rupture est calculée par un code de thermomécanique à partir d'un état thermomécanique du cœur, l'état thermomécanique du cœur étant connu par la mesure et/ou le calcul de la distribution de la puissance en tout point du cœur en fonction du temps, et/ou
- le calcul de la puissance linéique de rupture est réalisé au moins une fois toutes les deux heures, la puissance linéique seuil étant alors également recalculée.

L'invention a en outre pour objet un support utilisable dans un ordinateur et sur lequel est enregistré un programme d'ordinateur comprenant des instructions pour l'exécution des étapes d'un tel procédé.

L'invention a en outre pour objet un réacteur nucléaire comprenant :

- un cœur dans lequel des assemblages de combustible sont chargés, chaque assemblage comportant des crayons de combustible nucléaire comportant chacun des pastilles de combustible nucléaire et une gaine entourant les pastilles, et
- un calculateur configuré pour mettre en œuvre les étapes suivantes :

  • détermination d'au moins une durée limite de fonctionnement du réacteur nucléaire à une puissance inférieure ou égale à environ 92% de la puissance nominale du réacteur nucléaire dit fonctionnement à puissance intermédiaire, de sorte à éviter une rupture d'au moins une des gaines,
  • fonctionnement du réacteur nucléaire à puissance intermédiaire pendant une durée réelle strictement inférieure à la durée limite, et

- • relaxation d'au moins un seuil de protection de la centrale nucléaire en fonction d'une différence entre la durée limite et la durée réelle, le seuil de protection étant une limite de puissance linéique en tout point du cœur.

D'autres caractéristiques et avantages de l'invention apparaîtront à la lecture de la description qui va suivre, donnée uniquement à titre d'exemple et faite en se référant aux dessins annexés, sur lesquels :

- - la figure 1 est une vue schématique illustrant un réacteur nucléaire à eau pressurisée,
- - la figure 2 est une vue schématique latérale d'un assemblage de combustible du cœur du réacteur de la figure 1,
- - la figure 3 est une vue schématique en coupe longitudinale d'un crayon de combustible de l'assemblage de la figure 2, et

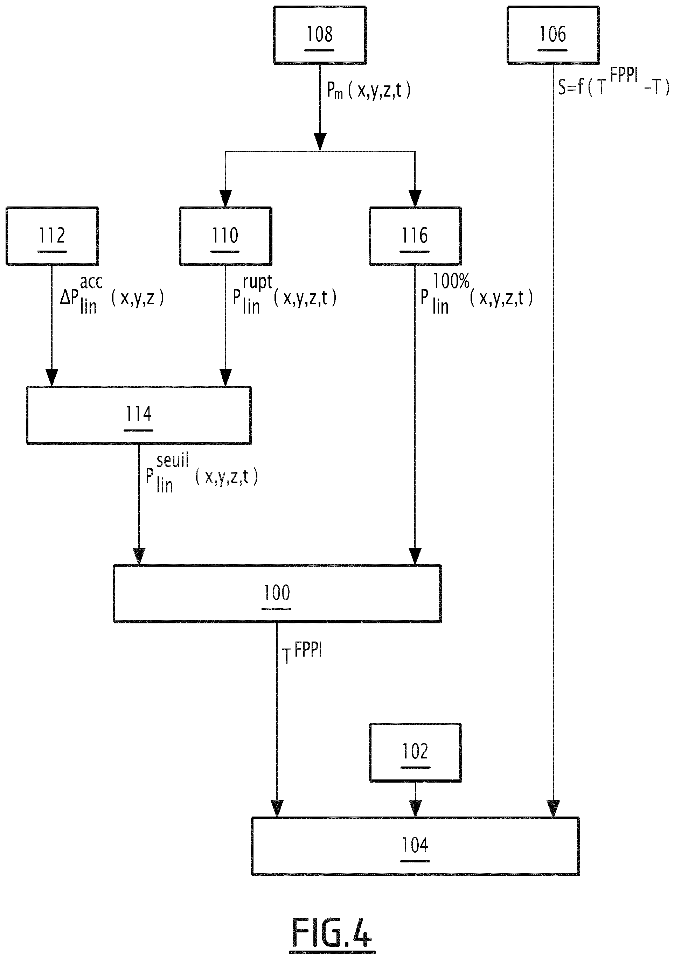

- - la figure 4 est un organigramme illustrant des étapes successives d'un procédé de surveillance mis en œuvre dans le réacteur de la figure 1.

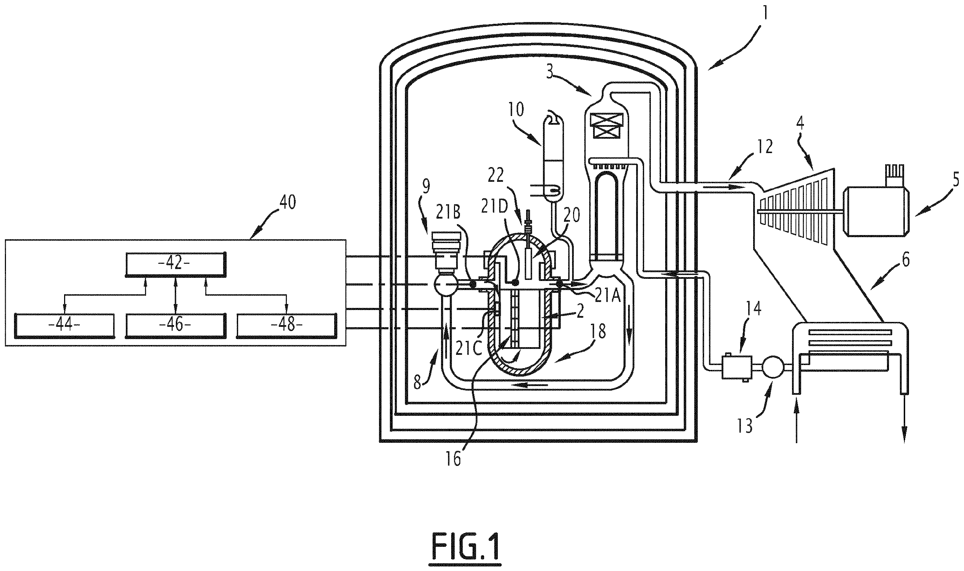

La figure 1 illustre schématiquement un réacteur nucléaire 1 à eau pressurisée qui comprend classiquement :

- - un cœur 2,
- - un générateur de vapeur 3,
- - une turbine 4 couplée à un générateur 5 d'énergie électrique, et
- - un condenseur 6.

Le réacteur 1 comprend un circuit primaire 8 équipé d'une pompe 9 et dans lequel circule de l'eau sous pression, selon le trajet matérialisé par les flèches sur la figure 1. Cette eau remonte notamment au travers du cœur 2 pour y être réchauffée en assurant la réfrigération du cœur 2.

Le circuit primaire 8 comprend en outre un pressuriseur 10 permettant de mettre sous pression l'eau circulant dans le circuit primaire 8 et de contrôler ladite pression.

L'eau du circuit primaire 8 alimente également le générateur de vapeur 3 où elle est refroidie en assurant la vaporisation d'eau circulant dans un circuit secondaire 12.

La vapeur produite par le générateur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

De manière classique également, le cœur 2 comprend des assemblages 16 de combustible nucléaire qui sont chargés dans une cuve 18. Un seul assemblage 16 est représenté sur la figure 1, mais le cœur 2 comprend par exemple 157 assemblages 16.

Le réacteur 1 comprend des grappes de commande 20 qui sont disposées dans la cuve 18 au-dessus de certains assemblages 16. Une seule grappe 20 est représentée sur la figure 1, mais le cœur 2 peut comprendre par exemple environ 60 grappes 20.

Les grappes 20 peuvent être déplacées par des mécanismes 22 pour venir s'insérer dans les assemblages de combustible 16 qu'elles surplombent.

Classiquement, chaque grappe de commande 20 comprend des crayons comportant un ou plusieurs matériaux absorbant les neutrons.

Ainsi, le déplacement vertical de chaque grappe 20 permet de régler la réactivité du réacteur 1 et autorise des variations de la puissance globale P fournie par le cœur 2 depuis la puissance nulle jusqu'à la puissance nominale PN, en fonction de l'enfoncement des grappes 20 dans les assemblages 16.

Certaines de ces grappes 20 sont destinées à assurer la régulation du fonctionnement du cœur 2, par exemple en puissance ou en température, et sont dénommées grappes de contrôle. D'autres sont destinées uniquement à l'arrêt du réacteur 1 et sont dénommées grappes d'arrêt.

Les grappes 20 sont réunies en groupes en fonction de leur nature et de leur destination. Par exemple pour la majorité des réacteurs de type 900 MWe, ces groupes sont dénommés groupes G1, G2, N1, N2, R, SA, SB, SC, SD...

Le réacteur 1 comprend également un certain nombre de capteurs de mesure de valeurs effectives de paramètres de fonctionnement du réacteur, notamment un thermocouple 21A de mesure de la température moyenne de l'eau du circuit primaire en sortie de la cuve 18 et un thermocouple 21B de mesure de la température moyenne de l'eau du circuit primaire en entrée de la cuve 18.

De manière classique également, le réacteur nucléaire 1 comprend des chambres externes 21C de mesure du flux neutronique, lesquelles chambres 21C sont disposées autour de la cuve 18 du cœur 2. Le nombre et les positions des chambres 21C, habituellement dénommées « chambres excore », varient en fonction du modèle du réacteur 1.

De manière classique encore, le réacteur 1 comprend des thermocouples 21D disposés dans le cœur 2 au-dessus d'assemblages 16 pour mesurer la température de l'eau du circuit primaire en sortie des assemblages 16. Une seule chambre 21C et un seul capteur 21D ont été représentés sur la figure 1.

Par ailleurs, certains réacteurs comprennent également des chambres internes fixes de mesure du flux neutronique (non représentées), lesquelles chambres sont disposées à l'intérieur de certains assemblages combustibles placés dans le cœur. Le nombre et les positions de ces chambres, habituellement dénommées « incore », varient en fonction du modèle du réacteur.

Les chambres excore 21C et les thermocouples 21D ou les chambres « incore » fixes fournissent des informations relatives à la répartition tridimensionnelle de la puissance locale dans le cœur.

La demande FR 2 796 196 décrit, par exemple, une méthode pour obtenir la répartition de la puissance tridimensionnelle.

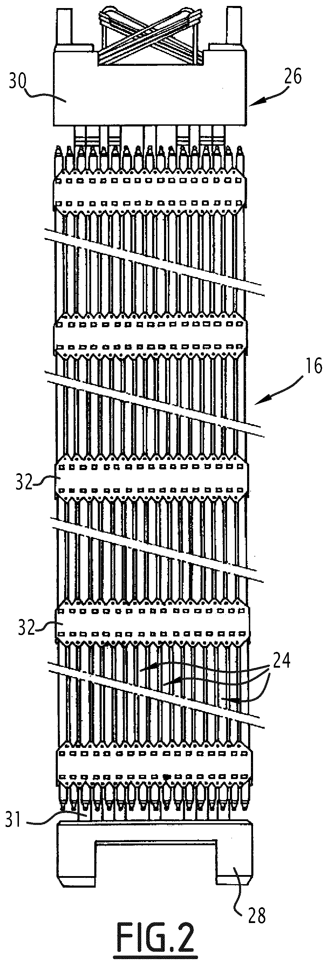

Comme illustré par la figure 2, chaque assemblage 16 comprend de manière classique un réseau de crayons de combustible 24 et un squelette 26 de support des crayons 24.

Le squelette 26 comprenant classiquement un embout inférieur 28, un embout supérieur 30, des tubes-guides 31 reliant les deux embouts 30 et 28 et destinés à recevoir des crayons des grappes de commande 20 et des grilles entretoises 32.

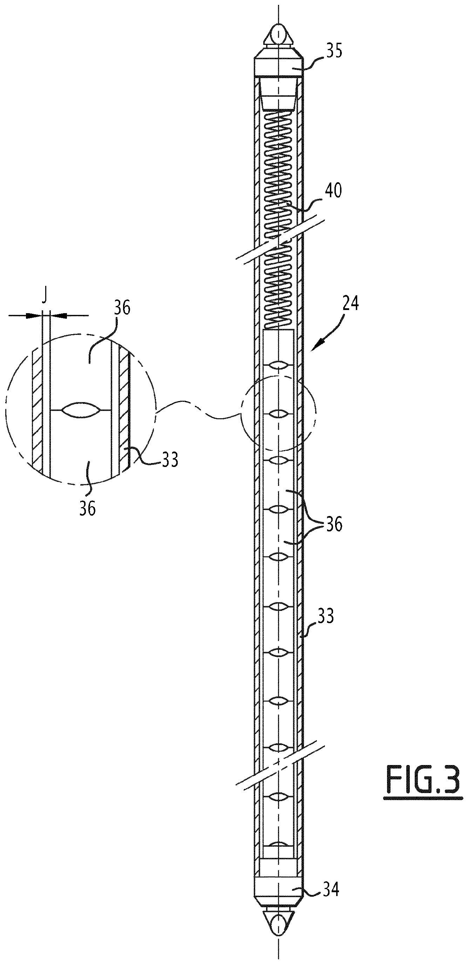

Comme illustré par la figure 3, chaque crayon de combustible 24 comprend de manière classique, une gaine 33 sous forme d'un tube fermé à son extrémité inférieure par un bouchon inférieur 34 et à son extrémité supérieure par un bouchon supérieur 35. Le crayon 24 comprend une série de pastilles 36 empilées dans la gaine 33 et prenant appui contre le bouchon inférieur 34. Un ressort de maintien 40 est disposé dans le tronçon supérieur de la gaine 33 pour prendre appui sur le bouchon supérieur 35 et sur la pastille 36 supérieure.

Classiquement, les pastilles 36 sont à base d'oxyde d'uranium et la gaine 33 en alliage de zirconium.

Sur la figure 3, qui correspond à un crayon de combustible 24 issu de fabrication et avant irradiation, il existe un jeu radial J entre les pastilles 36 et la gaine 33. Cela est illustré plus particulièrement par la partie cerclée agrandie de la figure 3.

C'est ce jeu J qui se ferme lors du conditionnement et lors du reconditionnement du crayon de combustible et qui s'ouvre lors du déconditionnement du crayon de combustible.

Comme illustré par la figure 1, le réacteur 1 comprend également un calculateur 40. Le calculateur 40 est par exemple le système utilisé plus généralement pour commander et contrôler le fonctionnement du réacteur nucléaire 1.

Ce calculateur 40 comprend par exemple une unité de traitement d'informations 42 comprenant un ou plusieurs processeur(s), des moyens 44 de stockage des données, des moyens 46 d'entrée/sortie et éventuellement des moyens 48 d'affichage. Les moyens 44 de stockage, qui comprennent par exemple une ou plusieurs mémoires, stockent un ou plusieurs programmes d'ordinateur pour exécuter les étapes décrites ci-dessous.

Le système 40 est relié aux différents capteurs de mesure de paramètres de fonctionnement du réacteur nucléaire 1, dont les capteurs 21A à 21D.

Un procédé de surveillance d'un réacteur nucléaire, par exemple, du type décrit précédemment est maintenant décrit.

Le procédé comprend les étapes suivantes :

- détermination 100 d'au moins une durée limite $T^{FPPI}$ de fonctionnement du réacteur nucléaire à puissance intermédiaire,
- fonctionnement 102 du réacteur nucléaire à puissance intermédiaire, et
- relaxation 104 d'au moins un seuil de protection de la centrale nucléaire.

Le procédé comprend de préférence les étapes suivantes :

- détermination 106 d'une relation de la relaxation,
- mesure et/ou calcul 108 de la distribution de la puissance $P_m(x, y, z, t)$,
- calcul 110 d'une puissance linéique de rupture $P_{lin}^{rupt}(x, y, z, t)$ en tout point du cœur et en fonction du temps,
- calcul 112 d'une variation maximale de puissance linéique $\Delta P_{lin}^{acc}(x, y, z)$ en tout point du cœur induite par des transitoires accidentels,
- calcul 114 d'une puissance linéique seuil $P_{lin}^{seuil}(x, y, z, t)$, et
- calcul 116 d'une puissance linéique à 100% $P_{lin}^{100\%}(x, y, z, t)$.

La durée limite $T^{FPPI}$ est déterminée à l'étape 100 de sorte notamment à éviter une rupture d'au moins une des gaines, notamment au cours d'une transitoire d'augmentation de puissance intervenant pendant le fonctionnement du réacteur nucléaire à puissance intermédiaire mais également pendant et après le passage du réacteur à un fonctionnement à puissance nominale.

En effet, lorsque le réacteur nucléaire fonctionne à puissance intermédiaire, les crayons de combustible ne sont plus conditionnés. Par exemple, les pastilles de combustible se rétractent et un jeu apparaît entre le combustible et la gaine. Ce jeu diminue ensuite à cause du fluage de la gaine vers l'intérieur car la pression du circuit primaire est supérieure à la pression interne des crayons.

Lorsque le réacteur nucléaire passe de nouveau à puissance nominale, le jeu se ferme complètement et les efforts sur la gaine augmentent.

La durée limite $T^{FPPI}$ est calculé en ligne, c'est-à-dire en temps réel et en continu, notamment lorsque le réacteur fonctionne à puissance intermédiaire. Lorsque le réacteur retourne à puissance nominale, la durée limite $T^{FPPI}$ augmente grâce au reconditionnement des crayons combustible, cette évolution étant calculée en ligne. Ce calcul précis en ligne permet notamment d'obtenir une durée limite supérieure à une durée souhaitée par l'exploitant et permet la conversion de la durée résiduelle en relaxation du seuil de protection.

Un exemple de méthode de calcul de la durée limite $T^{FPPI}$ est décrit ci-après.

Puis, le réacteur fonctionne à l'étape 102 à puissance intermédiaire (FPPI) pendant une durée réelle strictement inférieure à la durée limite $T^{FPPI}$.

La puissance intermédiaire correspond à une puissance inférieure ou égale à par exemple environ 92% de sa puissance nominale PN.

Une durée résiduelle est définie comme la différence entre la durée limite et la durée réelle. La durée résiduelle est donc positive.

Enfin, au moins un seuil de protection de la centrale est relaxée 104 en fonction de la durée résiduelle.

Le seuil de protection est, par exemple, une puissance linéique maximale conduisant, par exemple, à un arrêt automatique du réacteur lorsqu'il est franchi.

Pour les réacteurs dont le système de protection est capable d'estimer une puissance linéique maximale en ligne, ce seuil est défini à partir, par exemple, de mesures de flux neutronique des détecteurs ex-core 21C. Ces détecteurs de flux ex-core sont ici multi-étagés ce qui permet d'estimer une puissance moyenne fonction de la côte axiale à l'aide d'un algorithme de reconstruction. Cette forme axiale de puissance combinée à des facteurs axiaux de puissance par configuration grappée permet d'estimer la puissance linéique maximale du cœur.

Pour un réacteur tel que l'EPR (réacteur pressurisé européen), cette estimation est faite à partir de détecteurs de flux « in-core » donc disposés à l'intérieur du cœur.

Le seuil de protection correspond à un seuil absolu à ne pas dépasser en tout point du cœur.

Le seuil de protection dépend, par exemple, d'un déséquilibre axial de puissance, c'est-à-dire d'une différence de puissance entre le bas et le haut du cœur.

Lorsque la distribution de puissance n'est pas trop déséquilibrée vers le haut ou le bas du cœur, c'est-à-dire que le déséquilibre axial de puissance est dans un certain intervalle autour de 0, la concentration axiale de cette puissance n'est pas suffisante pour que la puissance locale atteigne une valeur susceptible de conduire à une rupture par IPG. Le seuil de protection est alors fixé à la valeur protégeant le combustible de la fusion. Par contre, lorsque le déséquilibre axial de puissance est suffisamment important en valeur absolu, c'est-à-dire que la valeur du déséquilibre axial de puissance est à l'extérieur de l'intervalle précédemment cité, la concentration axiale de puissance est suffisante pour conduire à une puissance locale pouvant entraîner une rupture par IPG ; le seuil de protection en puissance linéique élevée est alors dimensionné pour éviter cette rupture.

Dans l'exemple décrit, la relaxation 104 du seuil de protection en fonction de la durée résiduelle est calculée par une relation de relaxation.

On entend par « relaxé » une augmentation du seuil de protection.

L'augmentation est, par exemple, valable jusqu'à la fin d'un cycle de fonctionnement indépendamment du mode de fonctionnement. Alternativement, un exploitant peut de nouveau diminuer le seuil de protection de la centrale, de sorte à redistribuer la relaxation par la suite.

La détermination 106 de la relation de relaxation est réalisée avant le fonctionnement 102 du réacteur, par exemple, en bureau d'études.

Un exemple de méthode de calcul de la durée limite $T^{FPPI}$ est décrit ci-après.

Une mesure et/ou un calcul 108 de la distribution de la puissance linéique $P_m(x, y, z, t)$ est réalisé en tout point du cœur en fonction du temps, par exemple à l'aide des capteurs de mesure. Il s'agit, par exemple, d'une reconstruction combinant des mesures et des calculs.

La reconstruction 108 est, par exemple, réalisée régulièrement avec un certain pas de temps.

A partir de la distribution de la puissance linéique, un état thermomécanique des crayons du cœur, c'est-à-dire ici l'état thermomécanique entre la gaine et les pastilles de combustible, est calculé par un code de calcul thermomécanique. Il s'agit donc, à grosse mailles, d'un champ de contraintes dans la gaine dû à une éventuelle pression de la pastille sur la gaine, ou de la taille du jeu entre la pastille et la gaine lorsque ce jeu se réouvre en cas de FPPI.

L'état thermomécanique du cœur dépend notamment du conditionnement du crayon.

A partir de la connaissance de cet état thermomécanique, la puissance linéique de rupture $P_{lin}^{rupt}(x, y, z, t)$ est calculée à l'étape 110 à l'aide d'un code de thermomécanique mis en œuvre par le calculateur.

Le calcul 110 de la puissance linéique de rupture $P_{lin}^{rupt}(x, y, z, t)$ est réalisé avec une constante de temps de l'ordre de l'heure.

Préalablement, en bureau d'études, la variation maximale de puissance linéique $\Delta P_{lin}^{acc}(x, y, z)$ induite par des transitoires accidentels est calculée 112 en tout point du cœur.

La variation maximale de puissance linéique $\Delta P_{lin}^{acc}(x, y, z)$ est une donnée d'entrée du système de surveillance.

La variation maximale correspond à la valeur maximale de l'ensemble des variations de puissance linéique obtenues par des calculs statiques de distribution de puissances du cœur à partir de conditions aux limites provenant de la simulation des transitoires accidentels limitatifs vis-à-vis de la rupture par IPG.

De préférence, lesdits transitoires simulés sont les transitoires accidentels dits de catégorie 2 induisant les variations de puissance les plus fortes et les plus rapides dans le cœur.

Ces transitoires sont, par exemple :

- l'augmentation excessive de charge,
- le retrait incontrôlé de grappes de contrôle en puissance, et
- la chute de grappes de contrôle.

Ceci est, par exemple, décrit dans le brevet FR 2 924 852 B1.

A partir de la puissance linéique de rupture $P_{lin}^{rupt}(x, y, z, t)$ et de la variation maximale de puissance linéique $\Delta P_{lin}^{acc}(x, y, z)$, la puissance linéique seuil $P_{lin}^{seuil}(x, y, z, t)$ est calculée à l'étape 114.

La puissance linéique seuil $P_{lin}^{seuil}(x, y, z, t)$ est ici égale à la différence entre la puissance linéique de rupture $P_{lin}^{rupt}(x, y, z, t)$ et la variation induite par les transitoires accidentels $\Delta P_{lin}^{acc}(x, y, z)$, c'est-à-dire

$$P_{lin}^{seuil}(x, y, z, t) = P_{lin}^{rupt}(x, y, z, t) - \Delta P_{lin}^{acc}(x, y, z)$$

La puissance linéique seuil est calculée en tout point du cœur et en fonction du temps.

La distribution de puissance du cœur doit être telle qu'en tout point du cœur, la puissance linéique soit inférieure à la puissance linéique seuil.

La distribution de puissance est, par exemple, calculée et normalisée sur le cœur, de sorte que $P_{lin}(x, y, z, t)$ = P(x, y, z, t) * $P_{linnom}$ * $P_{rel}$ avec $P_{lin}$ la puissance linéique en un point du cœur, P la puissance locale normalisée à 1 sur l'ensemble du cœur en un point du cœur, $P_{linnom}$ la puissance linéique moyenne nominale sur le cœur et $P_{rel}$ le niveau de puissance en fraction du nominal.

Plus précisément, la puissance locale P(x, y, z, t) normalisée est égale à la puissance linéique $P_{lin}$(x, y, z, t)

$$P(x, y, z, t) = \frac{P_{lin}(x,y,z,t)}{\langle P_{lin}(x,y,z,t)\rangle_{coeur}}$$

divisée par la valeur moyenne sur le cœur de cette puissance $\langle P_{lin}$(x, y, z, t)$\rangle_{coeur}$, soit :

La puissance linéique moyenne $\langle P_{lin}$(x, y, z, t)$\rangle_{coeur}$ est par ailleurs égale à la puissance linéique moyenne à puissance nominale multipliée par le niveau de puissance en fraction : $\langle P_{lin}$(x, y, z, t)$\rangle_{coeur}$ = $P_{linnom}$ * $P_{rel}$, d'où l'équation précédente.

En effet, à tout moment, la puissance linéique doit être telle que, si un transitoire de puissance se réalise, la puissance linéique reste inférieure à la puissance linéique susceptible d'entraîner une rupture de la gaine. Ainsi, même en cas de transitoire de puissance, la gaine ne cède pas.

La puissance linéique seuil est ici recalculée à chaque fois que la puissance linéique de rupture $P_{lin}^{rupt}(x, y, z, t)$ est calculée.

En outre, la puissance linéique à 100% est calculée à l'étape 116 à partir de la distribution de la puissance

$P_m(x, y, z, t)$.

La puissance linéique à 100% $P_{lin}^{100\%}(x, y, z, t)$ correspond à une estimation de la puissance linéique en tout point du cœur et en fonction du temps si le réacteur était ramené rapidement de son état courant à un fonctionnement à puissance nominale.

Connaissant l'état du cœur à chaque instant, le système de surveillance est apte à calculer ce que serait l'état du cœur si réacteur était amené à un fonctionnement à puissance nominale à partir de l'instant considéré.

La durée limite est ensuite déterminée à l'étape 100 en fonction de la différence entre la puissance linéique seuil et la puissance linéique à 100% $P_{lin}^{100\%}(x, y, z, t)$.

Or, comme dit précédemment, la puissance linéique est censée rester inférieure à la puissance linéique seuil $P_{lin}^{seuil}(x, y, z, t)$.

Le retranchement à la puissance linéique seuil de la puissance linéique 100%, c'est-à-dire la différence $P_{lin}^{seuil}(x, y, z, t) - P_{lin}^{100\%}(x, y, z, t)$, est censée rester supérieure ou égale à zéro.

Ainsi la durée limite $T^{FPPI}$ est déterminée à l'étape 100 de manière à ce que pour chaque instant t inférieur à $T^{FPPI}$, la différence $P_{lin}^{seuil}(x, y, z, t) - P_{lin}^{100\%}(x, y, z, t)$ est supérieure ou égale à zéro.

On s'intéresse à la distribution de puissance en fonctionnement nominal car c'est dans cet état que la différence $P_{lin}^{seuil}(x, y, z, t) - P_{lin}^{100\%}(x, y, z, t)$ est minimale. $P_{lin}^{seuil}(x, y, z, t)$ décroit en fonction du temps lorsque le réacteur fonctionne en FPPI. $P_{lin}^{100\%}(x, y, z, t)$ fluctue de manière faible lorsque le réacteur fonctionne en FFPI à puissance stabilisée.

La différence $P_{lin}^{seuil}(x, y, z, t) - P_{lin}^{100\%}(x, y, z, t)$ décroît globalement en fonction du temps lorsque le réacteur fonctionne en FFPI à puissance stabilisée, c'est-à-dire que la durée limite se réduit au fur et à mesure que l'on passe à fonctionnement intermédiaire.

L'opérateur est alors à même de savoir dans quelle mesure il peut faire fonctionner le réacteur en fonctionnement à puissance intermédiaire.

En variante, la durée limite $T^{FPPI}$ est calculée par une méthode mettant en œuvre d'autres calculs, telle que celle décrite dans le brevet FR 2 924 852 B1.

Ce procédé de surveillance permet d'obtenir une durée limite supérieure à ce qui était obtenu auparavant. Ainsi, alors qu'auparavant l'exploitant faisait généralement fonctionner le réacteur à puissance intermédiaire pendant une durée proche de la durée limite, celle-ci étant inférieure à ce qui est obtenu par le procédé de surveillance de l'invention, il existe aujourd'hui une marge entre la durée limite et la durée pendant laquelle l'exploitant souhaite faire fonctionner le réacteur à durée intermédiaire.

Cette méthode de calcul permet également de pouvoir déterminer la durée limite en prenant en compte les caractéristiques de tous les types de combustibles présents dans le cœur, car les calculs de thermomécanique effectués en ligne pour déterminer à chaque instant le conditionnement des crayons de combustible prennent en compte les caractéristiques de chaque type de combustible présent dans le cœur.

Le procédé de surveillance utilise la marge entre la durée limite et la durée réelle de fonctionnement du réacteur à puissance intermédiaire, de manière à accroître la manœuvrabilité du réacteur en augmentant au moins un seuil de protection tout en garantissant un fonctionnement sûr au cours de l'exploitation du cœur.

## Revendications

1. Procédé de surveillance d'un réacteur nucléaire comprenant un cœur dans lequel des assemblages (10) de combustible sont chargés, chaque assemblage (10) comportant des crayons (24) de combustible nucléaire comportant chacun des pastilles (36) de combustible nucléaire et une gaine (33) entourant les pastilles,
le procédé comprenant les étapes de :

   - détermination (100) d'au moins une durée limite ($T^{FPPI}$) de fonctionnement du réacteur nucléaire à une puissance inférieure ou égale à environ 92% de la puissance nominale du réacteur nucléaire dit fonctionnement à puissance intermédiaire, de sorte à éviter une rupture d'au moins une des gaines,

- fonctionnement (102) du réacteur nucléaire à puissance intermédiaire pendant une durée réelle strictement inférieure à la durée limite (T$^{FPPI}$), et
- relaxation (104) d'un seuil de protection du réacteur nucléaire en fonction d'une différence entre la durée limite (T$^{FPPI}$) et la durée réelle,

le seuil de protection étant une limite de puissance linéique en tout point du cœur.

2. Procédé de surveillance selon la revendication 1, comprenant une étape de détermination (106) d'une relation de la relaxation du seuil de protection en fonction de la différence entre la durée limite (T$^{FPPI}$) et la durée réelle, la détermination (106) de la relation de relaxation étant réalisée avant le fonctionnement (102) du réacteur.

3. Procédé de surveillance selon la revendication 1 ou 2, comprenant les étapes suivantes avant la détermination (100) de la durée limite de fonctionnement (T$^{FPPI}$) :

   - calcul (114) d'une puissance linéique seuil $\left(P_{lin}^{seuil}(x,y,z,t)\right)$, et

   - calcul (116) d'une puissance linéique à 100% $\left(P_{lin}^{100\%}(x,y,z,t)\right)$ correspondant à une estimation de la puissance linéique en tout point du cœur et en fonction du temps si le réacteur fonctionne à puissance nominale à partir d'une mesure et/ou d'un calcul (108) de la distribution de la puissance réelle ($P_m(x,y,z,t)$) en tout point du cœur en fonction du temps,

   la détermination (100) de la durée limite (T$^{FPPI}$) étant réalisée en fonction de la différence entre la puissance linéique seuil $\left(P_{lin}^{seuil}(x,y,z,t)\right)$ et la puissance linéique à 100% $\left(P_{lin}^{100\%}(x,y,z,t)\right)$.

4. Procédé de surveillance selon la revendication 3, **caractérisé en ce que** la puissance linéique seuil $\left(P_{lin}^{seuil}(x,y,z,t)\right)$ est calculée en tout point du cœur et en fonction du temps, la distribution de puissance du cœur étant telle qu'en tout point du cœur, une puissance linéique est inférieure à la puissance linéique seuil $\left(P_{lin}^{seuil}(x,y,z,t)\right)$.

5. Procédé de surveillance selon la revendication 3 ou 4, comprenant les étapes suivantes avant le calcul de la puissance linéique seuil :

   - calcul (110) d'une puissance linéique de rupture $\left(P_{lin}^{rupt}(x,y,z,t)\right)$ en tout point du cœur et en fonction du temps, et

   - calcul (112) d'une variation maximale $\left(\Delta P_{lin}^{acc}(x,y,z)\right)$ de puissance linéique en tout point du cœur induite par des transitoires accidentels,

   la puissance linéique seuil $\left(P_{lin}^{seuil}(x,y,z,t)\right)$ étant égale à la différence entre la puissance linéique de rupture $\left(P_{lin}^{rupt}(x,y,z,t)\right)$ et la variation maximale $\left(\Delta P_{lin}^{acc}(x,y,z)\right)$ induite par des transitoires accidentels.

6. Procédé de surveillance selon la revendication 5, **caractérisé en ce que** la puissance linéique de rupture $\left(P_{lin}^{rupt}(x,y,z,t)\right)$ est calculée par un code de thermomécanique à partir d'un état thermomécanique du cœur, l'état thermomécanique du cœur étant connu par la mesure et/ou le calcul (108) de la distribution de la puissance en tout point du cœur en fonction du temps.

7. Procédé de surveillance selon la revendication 6, **caractérisé en ce que** le calcul (110) de la puissance linéique de rupture $\left(P_{lin}^{rupt}(x,y,z,t)\right)$ est réalisé au moins une fois toutes les deux heures, la puissance linéique seuil $\left(P_{lin}^{seuil}(x,y,z,t)\right)$ étant alors également recalculée.

8. Support utilisable dans un ordinateur et sur lequel est enregistré un programme d'ordinateur comprenant des instructions pour l'exécution des étapes d'un procédé selon l'une quelconque des revendications 1 à 7.

9. Réacteur nucléaire comprenant :

- un cœur dans lequel des assemblages (10) de combustible sont chargés, chaque assemblage (10) comportant des crayons (24) de combustible nucléaire comportant chacun des pastilles (36) de combustible nucléaire et une gaine (33) entourant les pastilles, et
- un calculateur (40) configuré pour mettre en œuvre les étapes suivantes :

• détermination (100) d'au moins une durée limite ($T^{FPPI}$) de fonctionnement du réacteur nucléaire à une puissance inférieure ou égale à environ 92% de la puissance nominale du réacteur nucléaire dit fonctionnement à puissance intermédiaire, de sorte à éviter une rupture d'au moins une des gaines,
• fonctionnement (102) du réacteur nucléaire à puissance intermédiaire pendant une durée réelle strictement inférieure à la durée limite ($T^{FPPI}$), et
• relaxation (104) d'un seuil de protection de la centrale nucléaire en fonction d'une différence entre la durée limite ($T^{FPPI}$) et la durée réelle, le seuil de protection étant une limite de puissance linéique en tout point du cœur.

**Patentansprüche**

1. Verfahren zur Überwachung eines Kernreaktors mit einem Kern, in welchen Brennelemente (10) geladen sind, wobei jedes Element (10) Kernbrennstäbe (24), welche jeweils Kernbrennstoffpellets (36) und eine Hülle (33), welche die Pellets umgibt, aufweisen, aufweist,
wobei das Verfahren aufweist die Schritte des:

- Ermittelns (100) mindestens einer Zeitdauergrenze ($T^{FPPI}$) des Betriebs des Kernreaktors mit einer Leistung kleiner oder gleich annähernd 92% der Nennleistung des Kernreaktors, was als Betrieb mit Zwischenleistung bezeichnet wird, so dass ein Versagen von mindestens einer der Hüllen vermieden wird,
- Betreibens (102) des Kernreaktors mit Zwischenleistung während einer tatsächlichen Zeitdauer, welche streng kleiner ist als die Zeitdauergrenze ($T^{FPPI}$), und
- Lockerns (104) mindestens einer Schutzschwelle des Kernreaktors in Abhängigkeit von einer Differenz zwischen der Zeitdauergrenze ($T^{FPPI}$) und der tatsächlichen Zeitdauer,

wobei die Schutzschwelle eine Grenze einer linearen Leistung an jedem Punkt des Kerns ist.

2. Verfahren zur Überwachung gemäß dem Anspruch 1, aufweisend einen Schritt des Ermittelns (106) eines Lockerungsverhältnisses der Schutzschwelle in Abhängigkeit von der Differenz zwischen der Zeitdauergrenze ($T^{FPPI}$) und der tatsächlichen Zeitdauer, wobei das Ermitteln (106) des Lockerungsverhältnisses vor dem Betreiben (102) des Reaktors durchgeführt wird.

3. Verfahren zur Überwachung gemäß dem Anspruch 1 oder 2, aufweisend die folgenden Schritte vor dem Ermitteln (100) der mindestens einen Zeitdauergrenze des Betriebs ($T^{FPPI}$):

- Berechnen (114) einer linearen Leistungsschwelle $\left(P_{lin}^{seuil}(x,y,z,t)\right)$, und

- Berechnen (116) einer linearen Leistung bei 100% $\left(P_{lin}^{100\%}(x,y,z,t)\right)$, welche einer Schätzung der linearen Leistung an jedem Punkt des Kerns entspricht und abhängig ist von der Zeit, wenn der Reaktor mit Nennleistung betrieben wird, auf Grundlage einer Messung und/oder einer Berechnung (108) der Verteilung der tatsächlichen Leistung ($P_m(x, y, z, t)$) an jedem Punkt des Kerns in Abhängigkeit von der Zeit,

wobei das Ermitteln (100) der mindestens einen Zeitdauergrenze ($T^{FPPI}$) in Abhängigkeit von der Differenz zwischen der linearen Leistungsschwelle $\left(P_{lin}^{seuil}(x,y,z,t)\right)$ und der linearen Leistung bei 100% $\left(P_{lin}^{100\%}(x,y,z,t)\right)$ umgesetzt wird.

4. Verfahren zur Überwachung gemäß dem Anspruch 3, **gekennzeichnet dadurch, dass** die lineare Leistungsschwelle $\left(P_{lin}^{seuil}(x, y, z, t)\right)$ berechnet wird an jedem Punkt des Kerns und in Abhängigkeit von der Zeit, wobei die Leistungsverteilung des Kerns so ist, dass an jedem Punkt des Kerns eine lineare Leistung kleiner als die lineare Leistungsschwelle $\left(P_{lin}^{seuil}(x, y, z, t)\right)$ ist.

5. Verfahren zur Überwachung gemäß dem Anspruch 3 oder 4, aufweisend die folgenden Schritte vor dem Berechnen der linearen Leistungsschwelle:

- Berechnen (110) einer linearen Versagens-Leistung $\left(P_{lin}^{rupt}(x, y, z, t)\right)$ an jedem Punkt des Kerns und in Abhängigkeit von der Zeit, und

- Berechnen (112) einer maximalen Variation $\left(\Delta P_{lin}^{acc}(x, y, z)\right)$ der lineare Leistung an jedem Punkt des Kerns, welche durch störfallbedingte Transienten hervorgerufen wird,

wobei die lineare Leistungsschwelle $\left(P_{lin}^{seuil}(x, y, z, t)\right)$ gleich der Differenz zwischen der linearen Versagens-Leistung $\left(P_{lin}^{rupt}(x, y, z, t)\right)$ und der maximalen Variation $\left(\Delta P_{lin}^{acc}(x, y, z)\right)$, welche durch störfallbedingte Transienten hervorgerufen wird, ist.

6. Verfahren zur Überwachung gemäß dem Anspruch 5, **gekennzeichnet dadurch, dass** die lineare Versagens-Leistung $\left(P_{lin}^{rupt}(x, y, z, t)\right)$ durch einen Thermomechanik-Code aus einem thermomechanischen Zustand des Kerns berechnet wird, wobei der thermomechanische Zustand des Kerns durch die Messung und/oder die Berechnung (108) der der Leistungsverteilung an jedem Punkt des Kerns in Abhängigkeit von der Zeit bekannt ist.

7. Verfahren zur Überwachung gemäß dem Anspruch 6, **gekennzeichnet dadurch, dass** das Berechnen (110) der linearen Versagens-Leistung $\left(P_{lin}^{rupt}(x, y, z, t)\right)$ mindestens einmal alle zwei Stunden umgesetzt wird, wobei die lineare Leistungsschwelle $\left(P_{lin}^{seuil}(x, y, z, t)\right)$ auch gleichermaßen neu berechnet wird.

8. Träger, welcher in einem Computer nutzbar ist und auf welchem ein Computerprogramm aufgezeichnet ist, welches Anweisungen zur Ausführung der Schritte eines Verfahrens gemäß einem der Ansprüche 1 bis 7 beinhaltet.

9. Kernreaktor, aufweisend:

- einen Kern, in welchen Brennelemente (10) geladen sind, wobei jedes Element (10) Kernbrennstäbe (24), welche jeweils Kernbrennstoffpellets (36) und eine Hülle (33), welche die Pellets umgibt, aufweisen, aufweist, und
- einen Rechner (40), welcher dazu eingerichtet ist, die folgenden Schritte auszuführen:

• Ermitteln (100) mindestens einer Zeitdauergrenze (T$^{FPPI}$) des Betriebs des Kernreaktors mit einer Leistung kleiner oder gleich annähernd 92% der Nennleistung des Kernreaktors, was als Betrieb mit Zwischenleistung bezeichnet wird, so dass ein Versagen von mindestens einer der Hüllen vermeidet wird,
• Betreiben (102) des Kernreaktors mit Zwischenleistung während einer tatsächlichen Zeitdauer, welche streng kleiner ist als die Zeitdauergrenze (T$^{FPPI}$), und
• Lockern (104) mindestens einer Schutzschwelle des Kernreaktors in Abhängigkeit von einer Differenz zwischen der Zeitdauergrenze (T$^{FPPI}$) und der tatsächlichen Zeitdauer, wobei die Schutzschwelle eine Grenze einer linearen Leistung an jedem Punkt des Kerns ist.

**Claims**

1. A method for monitoring a nuclear reactor comprising a core in which fuel assemblies (10) are loaded, each assembly (10) comprising nuclear fuel rods (24) each including nuclear fuel pellets (36) and a cladding (33) surrounding the pellets,
the method comprising the following steps:

- determining (100) at least one operating time limit (T$^{FPPI}$) for the operation at a power inferior or equal to about 92% of the nominal power of the nuclear reactor called operation at reduced power of the nuclear reactor, so as to avoid a rupture of at least one of the claddings,
- operating (102) the nuclear reactor at the reduced power for an actual time strictly less than the time limit (T$^{FPPI}$), and
- relaxing (104) a protection threshold of the nuclear reactor as a function of a difference between the time limit (T$^{FPPI}$) and the actual time,

the protection threshold being a threshold of a linear power at any point of the core.

2. The monitoring method according to claim 1, comprising a step for determining (106) a relationship of the relaxing of the protection threshold as a function of the difference between the time limit (T$^{FPPI}$) and the actual time, the determination (106) of the relationship of the relaxing being done before operating (102) the reactor.

3. The monitoring method according to claim 1 or 2, comprising the following steps before determining (100) the operating time limit (T$^{FPPI}$):

- calculating (114) a threshold linear power $\left(P_{lin}^{threshold}(x,y,z,t)\right)$, and

- calculating (116) a linear power at 100% $\left(P_{lin}^{100\%}(x,y,z,t)\right)$ corresponding to an estimate of the linear power at any point of the core and as a function of time if the reactor is operating at nominal power from a measurement and/or a calculation (108) of the distribution of the actual power ($P_m(x, y, z, t)$) at any point of the core as a function of time,

the determination (100) of the time limit (T$^{FPPI}$) being made as a function of the difference between the threshold linear power $\left(P_{lin}^{threshold}(x,y,z,t)\right)$ and the linear power at 100% $\left(P_{lin}^{100\%}(x,y,z,t)\right)$.

4. The monitoring method according to claim 3, **characterized in that** the threshold linear power $\left(P_{lin}^{threshold}(x,y,z,t)\right)$ is calculated at any point of the core and as a function of time, the power distribution of the core being such that at any point of the core, a linear power is below the threshold linear power $\left(P_{lin}^{threshold}(x,y,z,t)\right)$.

5. The monitoring method according to claim 3 or 4, comprising the following steps before calculating the threshold linear power:

- calculating (110) a rupture linear power $\left(P_{lin}^{rupt}(x,y,z,t)\right)$ at any point of the core and as a function of time, and

- calculating (112) a maximum linear power variation $\left(\Delta P_{lin}^{acc}(x,y,z)\right)$ at any point of the core caused by accidental spikes,

the threshold linear power $\left(P_{lin}^{threshold}(x,y,z,t)\right)$ being equal to the difference between the rupture linear power $\left(P_{lin}^{rupt}(x,y,z,t)\right)$ and the maximum variation $\left(\Delta P_{lin}^{acc}(x,y,z)\right)$ induced by accidental spikes.

6. The monitoring method according to claim 5, **characterized in that** the rupture linear power $\left(P_{lin}^{rupt}(x,y,z,t)\right)$ is calculated by a thermomechanical code from a thermomechanical state of the core, the thermomechanical state of the core being known by the measurement and/or the calculation (108) of the distribution of the power at any point of the core as a function of time.

7. The monitoring method according to claim 6, **characterized in that** the calculation (110) of the rupture linear power $\left( P_{lin}^{rupt}(x,y,z,t) \right)$ is done at least once every two hours, the threshold linear power $\left( P_{lin}^{threshold}(x,y,z,t) \right)$ then also being recalculated.

8. A medium usable in a computer and on which a computer program comprising instructions for executing steps of a method according to any one of claims 1 to 7 is recorded.

9. A nuclear reactor, comprising:

    - a core in which fuel assemblies (10) are loaded, each assembly (10) comprising nuclear fuel rods (24) each including nuclear fuel pellets (36) and a cladding (33) surrounding the pellets, and
    - a computer (40) configured to carry out the following steps:

        • determining (100) at least one operating time limit (T$^{FPPI}$) for the operation at a power inferior or equal to about 92% of the nominal power of the nuclear reactor called operation at reduced power of the nuclear reactor, so as to avoid a rupture of at least one of the claddings,
        • operating (102) the nuclear reactor at the reduced power for an actual time strictly less than the time limit (T$^{FPPI}$), and
        • relaxing (104) one protection threshold of the nuclear power plant as a function of a difference between the time limit (T$^{FPPI}$) and the actual time, the protection threshold being a threshold of a linear power at any point of the core.

EP 3 659 158 B1

FIG.1

## FIG.2

FIG.3

108

$P_m(x,y,z,t)$

106

$S = f(T^{FPPI} - T)$

112

110

116

$\Delta P_{lin}^{acc}(x,y,z)$

$P_{lin}^{rupt}(x,y,z,t)$

$P_{lin}^{100\%}(x,y,z,t)$

114

$P_{lin}^{seuil}(x,y,z,t)$

100

$T^{FPPI}$

102

104

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 2753028 A1
- FR 2924852
- FR 2796196
- FR 2924852 B1